# EUROPÄISCHE PATENTANMELDUNG

(11) **EP 1 780 059 A2**
(43) Veröffentlichungstag der Anmeldung: **02.05.2007**
(21) Anmeldenummer: 06019143.4
(22) Anmeldetag: 13.09.2006
(51) Int. Cl.: B60H 1/00

(54) **Kraftfahrzeug-Klimaanlage**

(30) Priorität: 26.10.2005 DE 102005051518
(71) Anmelder: Behr GmbH & Co. KG, 70469 Stuttgart (DE)
(72) Erfinder: Feith, Thomas, Dipl.-Ing., 70825 Korntal-Münchingen (DE); Grieb, Andreas, Dipl.-Ing., 70499 Stuttgart (DE); Klingler, Dietrich, Dipl.-Ing., 73540 Heubach (DE)

(57) **Zusammenfassung**

Die Erfindung betrifft eine Kraftfahrzeug-Klimaanlage (1), insbesondere eine mehrzonige Kraftfahrzeug-Klimaanlage, aufweisend mindestens ein Gebläse, mindestens einen Heizer (2) und mindestens einem Verdampfer (3), die in einem Gehäuse (4) angeordnet sind, wobei das Gehäuse (4) derart ausgebildet ist, dass in Luftströmungsrichtung gesehen nach dem Heizer (2) und Verdampfer (3) eine Mehrzahl von Luftauslässen eine zusammenhängende Fläche bildend zumindest über einen kurzen Bereich nebeneinander parallel verlaufend angeordnet sind, die zu Luftkanälen mit mindestens zwei unterschiedlichen Zielbereichen führen.

## Beschreibung

Die Erfindung betrifft eine Kraftfahrzeug-Klimaaniage gemäß dem Oberbegriff des Anspruches 1.

Bei Kraftfahrzeug-Klimaanlagen, insbesondere bei mehrzonigen Klimaanlagen, ist der Bauraumbedarf in X- und Z-Richtung sehr groß, was mit den erforderlichen Einbauten im Cockpitmittelbereich, insbesondere angesichts des Trends zu "leichteren" und "gedrungeren" Cockpits, kollidiert. Ferner sind derartige Klimaanlagen in Hinblick auf ihre Strömungsverläufe, insbesondere wenn eine mittels Bypässen und Kaltluftbeimischungen erzeugte Temperaturschichtung vorgesehen ist, sehr anfällig in Hinblick auf die geringsten Veränderungen der Kanalverläufe oder zusätzliche Luftführungseinbauten im Klimagerät. Die Abstimmungen, bis die Temperaturschichtung und die Luftmenge optimiert sind, sind sehr aufwändig.

Es ist Aufgabe der Erfindung, eine verbesserte Kraftfahrzeug-Klimaanlage zur Verfügung zu stellen. Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage, insbesondere eine mehrzonige Kraftfahrzeug-Klimaanlage, vorgesehen, aufweisend mindestens ein Gebläse, mindestens einen Heizer und mindestens einem Verdampfer, die in einem Gehäuse angeordnet sind, wobei das Gehäuse derart ausgebildet ist, dass in Luftströmungsrichtung gesehen nach dem Heizer und Verdampfer eine Mehrzahl von Luftauslässen eine zusammenhängende Fläche bildend zumindest über einen kurzen Bereich nebeneinander parallel verlaufend angeordnet sind, die zu Luftkanälen mit mindestens zwei unterschiedlichen Zielbereichen führen.

Das Größenverhältnis Breite zu Höhe der Klimaanlage liegt bei übereinander angeordneten Wärmetauschern zwischen 3,0 und 1,6, vorzugsweise zwischen 2,8 und 1,9. Insbesondere bei dieser Ausgestaltung ist es vorteilhaft, die Abgriffe für die kalte und warme Luft übereinander anzuordnen, wodurch sich im Vergleich zur Z-Richtung eine große Ausdehnung in Y-Richtung, also in Richtung der Breite des Fahrzeugs, ergibt.

Die gemeinsame Fläche ist vorzugsweise rechteckförmig ausgebildet, wobei vorzugsweise sämtliche Luftkanäle abgesehen von dem oder den Defrost-Luftkanälen Teil hiervon sind. Die gemeinsame Fläche kann dabei auch durch eine gekrümmte Ebene oder durch eine abgewinkelte Fläche (beispielsweise L-förmig) gebildet sein. Vorteilhafterweise auch Abgriffe z.B. für den Fußraumbereich oder den Seitendüsenbereich seitlich am Gehäuse angeordnet sein.

Der Heizer ist vorzugsweise in einer Ebene mit dem Verdampfer angeordnet. Dabei liegen vorzugsweise die Eintrittsflächen und/oder die Austrittsflächen von Heizer und Verdampfer in einer gemeinsamen Ebene.

Bei der Auslegung ist jedoch der üblicherweise höhere Druckabfall des Verdampfers zu berücksichtigen, so dass dies bei der Anströmung berücksichtigt werden muss, d.h. die dem Verdampfer zugeführte Luftmenge muss größer sein als die dem Heizer zugeführte Luftmenge. Bei der Auslegung ist zudem zu berücksichtigen, dass einzelne Auslässe mehr warme als kalte Luft bekommen, wie insbesondere die Defrost- und Fußausströmer verglichen mit den Mittel- und Seitendüsen.

Bevorzugt ist der Heizer räumlich oberhalb von dem Verdampfer angeordnet. Diese Anordnung ermöglicht eine einfache und kurze Ausgestaltung des Dafrost-Luftkanals. Ferner ermöglicht die Anordnung des Verdampfers unterhalb des Heizers eine kurze und einfache, schwerkraftbetätigte Ableitung des sich im Verdampfer sammelnden Kondenswassers nach unten.

Im Gehäuse ist vorzugsweise eine Mehrzahl von parallel zueinander verlaufenden Trennwänden vorgesehen. Das Vorsehen der Trennwände ermöglicht eine einfache Aufteilung des Luftstroms direkt nach dem Verdampfer und Heizer.

Zwischen zwei Trennwänden und/oder zwischen der Gehäusewand und der äußersten Trennwand ist vorzugsweise jeweils mindestens eine Klappe zum Verschließen der Öffnung vorgesehen. Auf die Öffnungen wird - auf Grund ihrer Funktion - teilweise auch als Abgriffe Bezug genommen.

Die Schwenkachsen der Klappen verlaufen vorzugsweise bei einer größeren Anzahl in horizontaler Richtung nebeneinander angeordneter Trennwände in vertikaler Richtung, da so eine einfache, direkte Durchführung einer Achse der Klappe durch die Gehäusewand und eine Anbringung eines Aktuators auf der relativ großen Gehäuseaußenfläche möglich ist. Es ist jedoch auch eine vertikale Ausrichtung der Klappen-Schwenkachsen möglich. Ebenfalls können an Stelle oder in Kombination mit Klappen auch Rollbandkassetten, wie bspw. in der DE 103 37 323 A1 offenbart, oder an sich bekannten Lamellenklappen, Jalousiekassetten oder Jalousieklappenanordnungen wie beispielsweise in der DE 41 19 474 offenbart, verwendet werden.

Im Gehäuse ist vorzugsweise eine Trennebene vorgesehen, die zumindest nach dem Heizer und Verdampfer angeordnet ist. Vorzugsweise ist die Trennebene bereits zwischen dem Heizer und Verdampfer angeordnet, so dass die Bauteile sicher im Gehäuse aufgenommen werden können und auf einfache Weise ein Überströmen von Luft verhindert werden kann. Zudem ist das Gehäuse durch das Vorsehen einer breiteren Trennebene stabiler ausgebildet.

Die Trennebene unterteilt vorzugsweise die einem Zielbereich zugeordneten Klappen, also beispielsweise die Warmluft- und Kaltluft-Klappen für die linke Front-Seitendüse, die zum Verschließen der entsprechenden Öffnungen (Abgriffe) vorgesehen sind, in einen Warm- und einen Kaltluftkanal. Der Warm- und Kaltluftkanal können getrennt bis kurz vor dem entsprechenden Ausströmer ausgebildet sein, jedoch können die Kanäle auch kurz nach dem Gehäuse zusammengeführt und als gemeinsamer Kanal zum Ausströmer geführt werden.

Das Gehäuse ist vorzugsweise im Bereich der Trennwände und die Luftverteilung und -temperierung regelnden Klappen spiegelsymmetrisch zur vertikalen Mittelebene des Kraftfahrzeugs (X-Z-Ebene) ausgebildet.

Vorzugsweise ist eine Mischeinheit für den Warm- und Kaltluftkanal direkt vor dem Ausströmer des Zielbereichs vorgesehen, wodurch der Bauraumbedarf vom Gehäuse der Klimaanlage in den Zielbereich verlagert wird, so dass die Klimaanlage etwas kleiner bauen kann.

Die Mischeinheit ist vorzugsweise in ein Modul mit dem Ausströmer integriert, so dass eine einfache Montage möglich ist.

Eine weitere Verringerung des Bauraumbedarfs im Bereich der Klimaanlage wird dadurch erreicht, dass in das Modul zudem mindestens eine Klappe integriert ist.

Vorzugsweise ist eine Misch-/Verteileinheit für den Warm- und Kaltluftkanal vor mehreren Ausströmern des Zielbereichs vorgesehen. In der Misch-/Verteileinheit ist vorzugsweise mindestens eine Klappe für die Verteilung des gemischten Luftstroms auf die einzelnen Ausströmer vorgesehen.

Bevorzugt ist je eine Misch-/Verteileinheit einer Zone der Klimaanlage zugeordnet, wobei bevorzugt mindestens zwei Misch/Verteileinheiten vorgesehen sind.

Je eine Misch-/VeAeileinheit ist vorzugsweise einer Fußraumdüse und mindestens einer Belüftungsdüse, insbesondere einer Mittel- und einer Seitendüse, zugeordnet.

Der Verbindungskanal vom Gebläse zum Heizer und Verdampfer ist vorzugsweise schräg zur Eintrittsfläche des Heizers und Verdampfers verlaufend angeordnet, wobei sich der Verbindungskanal verjüngt, insbesondere keilförmig verjüngt. Dies ermöglicht eine einfache, gleichmäßige und bauraumgünstige Luftzuleitung und Verteilung auf die Eintrittsflächen von Heizer und Verdampfer. Ferner ist eine derartige Form einfach herstellbar.

Bevorzugt ist ein Defrost-Auslass über einen Großteil der Oberseite des Gehäuses verlaufend ausgebildet.Dies ermöglicht eine einfache, kurze Leitung zur den entsprechenden Ausströmern.

Im Folgenden wird die Erfindung anhand eines Ausführungsbeispiels mit mehreren Varianten, teilweise unter Bezugnahme auf die Zeichnung, im Einzelnen erläutert. Es zeigen:

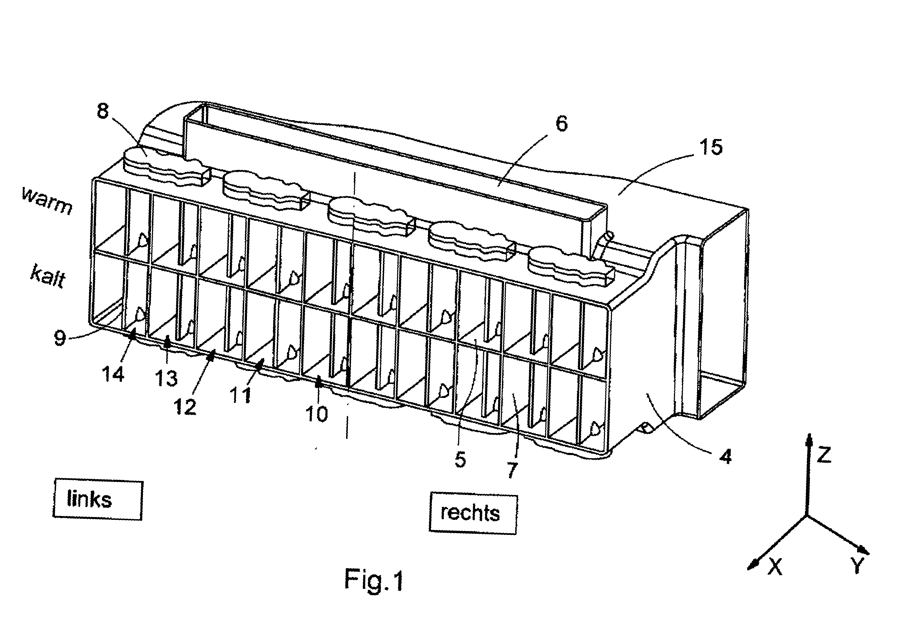

- Fig. 1: eine perspektivische Darstellung eines Klimaanlagengehäuses gemäß dem Ausführungsbeispiel,

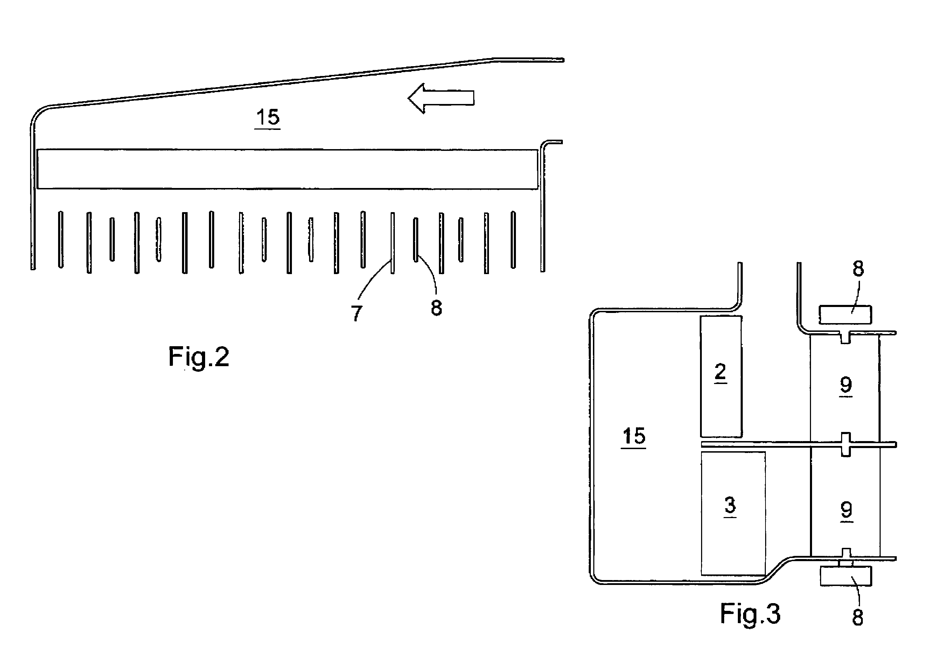

- Fig. 2: eine in horizontaler Richtung (X-Y-Ebene) geschnittene Darstellung des Klimaanlagengehäuses von Fig. 1,
- Fig. 3: eine in vertikaler Richtung (X-Z-Ebene) geschnittene Darstellung des Klimaanlagengehäuses von Fig. 1 mit schematischer Darstellung der hierin angeordneten Bauteile,
- Fig. 4: eine zweite Variante des Ausführungsbeispiels,
- Fig. 5: eine dritte Variante des Ausführungsbeispiels,
- Fig. 6: eine vierte Variante des Ausführungsbeispiels, und
- Fig. 7: eine fünfte Variante des Ausführungsbeispiels.

Die Kraftfahrzeug-Klimaanlage 1 weist ein Gebläse (nicht dargestellt), einen Heizer 2 und einen Verdampfer 3 auf, die in einem Gehäuse 4 angeordnet sind. Das Gehäuse 4 ist in X- und Z-Richtung relativ kurz, in Y-Richtung jedoch relativ breit ausgebildet. Hierbei bezeichnet die X-Richtung die normale Fahrtrichtung des Kraftfahrzeugs, die Y-Richtung die horizontale Richtung quer hierzu und die Z-Richtung die Vertikale.

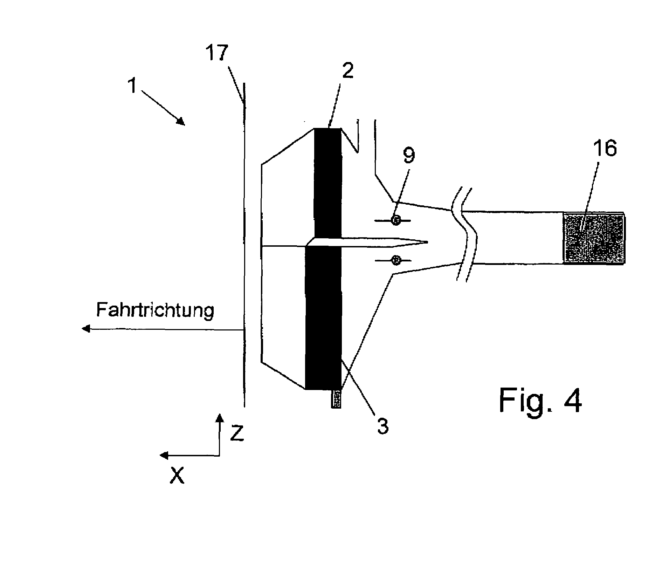

Im Gehäuse 4 ist der Heizer 2 oberhalb des Verdampfers 3 angeordnet (siehe Fig. 3), wobei die Eintrittsflächen von Heizer 2 und Verdampfer 3 in einer Ebene angeordnet sind. Diese Anordnung vereinfacht die Ableitung des sich im Verdampfer 3 sammelnden Kondenswassers nach unten, wo es über einen Kondensatablauf nach außen gelangt, wie in den Figuren 4, 5 und 6, die Varianten des ersten Ausführungsbeispiels betreffen, angedeutet ist. Der Heizer 2 und der Verdampfer 3 sind von einer horizontal verlaufenden Trennebene 5, die in Höhe der in einer Ebene liegenden Eintrittsflächen beginnt, getrennt. Auf Grund der unterschiedlichen Bautiefe von Heizer 2 und Verdampfer 3 endet der Heizer 2 vor dem Verdampfer 3. Direkt nach dem Ende des Heizers 2 zweigt nach oben ein rechteckförmig ausgebildeter Defrost-Luftkanal 6 für die Scheibenentfrostung ab, welcher mit Hilfe einer Klappe (nicht dargestellt) geregelt wird. Hinter dem Abzweig zum Defrost-Luftkanal 6 sind zwischen der Oberseite des Gehäuses 4, der Trennebene 5 und der Unterseite des Gehäuses 4 parallel zueinander verlaufende Trennwände 7 angeordnet, welche die einzelnen Luftkanäle, die zu unterschiedlichen Zielbereichen führen voneinander trennen, wobei jeweils ein Warmluftkanal oberhalb eines Kaltluftkanals angeordnet ist. Je eine von einem Stellmotor 8 betätigte Klappe 9 regelt die durch den entsprechenden Luftkanal strömende Warm- oder Kaltluftmenge. Zur Reduzierung der Anzahl an Stellmotoren ist eine Kopplung der sich zugeordneten Kalt- und Warmluftklappe 9 durch eine Kinematik zur Betätigung mit einem Stellmotor möglich. Kalt- und Warmluft werden kurz oder unmittelbar nach dem Gehäuse 4 zusammengeführt und als entsprechende Mischluft über Luftkanäle zu den entsprechenden Zielbereichen, vorliegend den entsprechenden Ausströmern (nicht dargestellt), gebracht.

Das Gehäuse 4 ist ab den Eintrittsflächen spiegelsymmetrisch zur X-Z-Ebene ausgebildet. Hierbei beginnen in der Gehäusemitte die Luftkanäle 10 für die Fondbelüftung, anschließend die Luftkanäle 11 für die Mitteldüse, nachfolgend die Luftkanäle 12 für den hinteren Fußraum, dann die Luftkanäle 13 für den vorderen Fußraum und außen die Luftkanäle 14 für die Seitendüse.

Das Gehäuse 4 ist vorliegend derart ausgebildet, dass der das Gebläse und den Heizer 2 und den Verdampfer 3 verbindende Verbindungskanal 15 vom Gebläse zum Heizer 2 und Verdampfer 3 schräg zur Eintrittsfläche des Heizers 2 und Verdampfers 3 verlaufend angeordnet ist, wobei sich der Verbindungskanal 10 zur Eintrittsfläche hin keilförmig verjüngt, so dass die vom Gebläse geförderte Luft bei einander entsprechenden Klappenstellungen gleichmäßig verteilt wird.

Gemäß einer ersten, nicht in der Zeichnung dargestellten Variante ist der Verdampfer oberhalb des Heizers angeordnet, so dass die warme Luft verbessert in den Fußraum geführt werden kann. Die Luft wird entsprechend dem zuvor beschriebenen Ausführungsbeispiel an den einzelnen Öffnungen getrennt abgegriffen und zu den Zielbereichen geleitet.

Fig. 4 zeigt eine zweite Variante, gemäß der die warmen und kalten Luftströme kurz nach der Klimaanlage 1, bei welcher der Heizer 2 oberhalb des Verdampfers 3 angeordnet ist und in diesem Fall deren Austrittsflächen in einer Ebene liegen, nach den Klappen 9 wieder miteinander vermischt werden und über einen gemeinsamen Luftkanal dem entsprechenden Ausströmer 16 zugeführt werden. Die Klappen 9 einer Zone werden mit Hilfe eines Schrittmotors angetrieben und sind über eine Kurvenscheibe miteinander gekoppelt. Die Klimaanlage 1 ist hierbei, wie auch bei den anderen Varianten und dem zuvor beschriebenen Ausführungsbeispiel, direkt hinter der Stimwand 17 angeordnet, so dass eine sehr geringe Bautiefe (X-Richtung) realisiert werden kann.

Alternativ zur Verwendung von Klappen können beliebige andere Regelorgane verwendet werden. Insbesondere sind auch Rollbandkassetten geeignet, welche auf besonders einfache Weise eine bspw. vierzonige Klimaanlage mit unterschiedlichen Temperaturen und Temperaturschichtungen innerhalb der jeweiligen Zone ermöglichen.

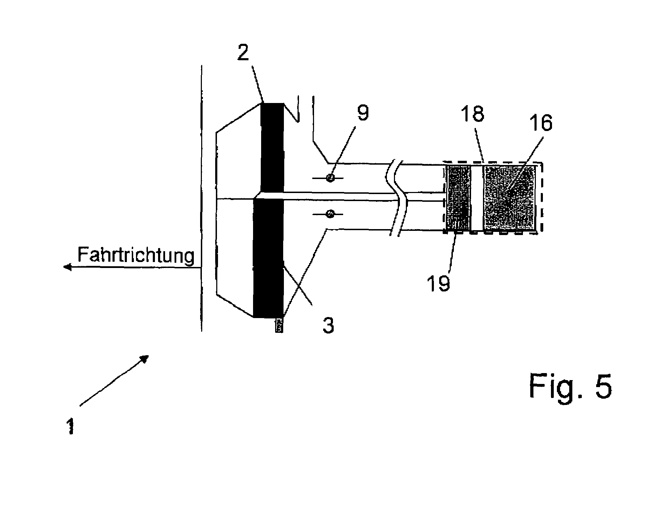

Gemäß der in Fig. 5 dargestellten dritten Variante, deren Aufbau dem der zuvor beschriebenen Variante entspricht, sofern nachfolgend nicht ausdrücklich anders beschrieben ist. Im Unterschied zur zweiten Variante werden der jeweilige Warm- und Kaltluftstrom nicht direkt nach der Klimaanlage 1 zusammengeführt, sondern in voneinander getrennt ausgebildeten Luftkanälen bis zu einem Modul 18 geführt, welches sowohl eine Mischeinheit 19 als auch den Ausströmer 16 (Ausströmeinheit) umfasst.

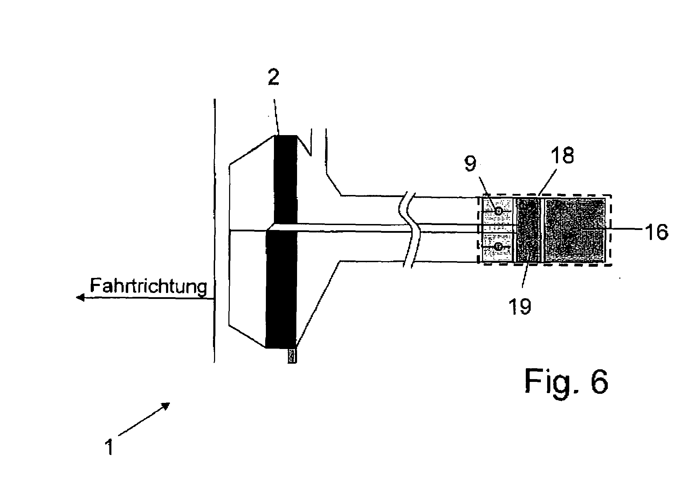

Entsprechend der in Fig. 6 dargestellten vierten Variante, deren Aufbau dem der dritten Variante entspricht, sofern nachfolgend nicht ausdrücklich anders beschrieben ist, sind die Klappen 9 in das Modul 18 vor die Mischeinheit 19 integriert, so dass die Klappen im Gehäuse 4 entfallen können, wodurch sich der Bauraumbedarf im Bereich der Klimaanlage 1, also üblicherweise im Bereich der Cockpitmittelkonsole, weiter verringert und sich zu den Ausströmern 16 verlagert. Die Module 18 weisen vorliegend eine Mischeinheit 19 auf, die ausgebildet ist, wie in der DE 102 43 658 A1 beschrieben. Der Ausströmer 16 ist als Komfortdüse ausgebildet, die eine Umstellbarkeit von diffusem zu gerichtetem Strahl aufweist, wie in der DE 102 43 974 A1 beschrieben. Alternativ ist beispielsweise auch eine Ausgestaltung möglich, wie in der DE 103 53 182 A1 beschrieben.

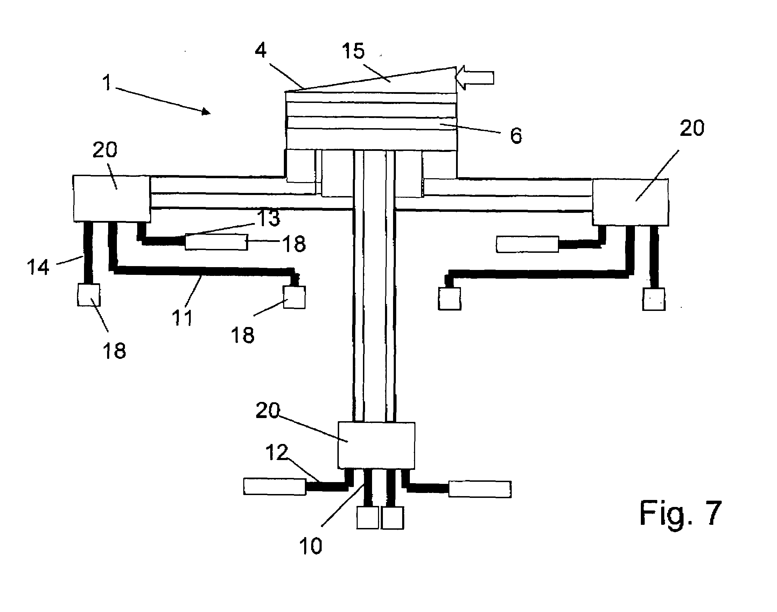

Fig. 7 zeigt eine fünfte Variante, vorliegend einer dreizonigen Kraftfahrzeug-Klimaanlage 1, gemäß der kalte und warme Luft am Gehäuse 4 abgegriffen wird und getrennt voneinander, was in Fig. 7 schematisch angedeutet ist, zu vorliegend drei Misch-/Verteileinheiten 20 geführt wird. Der Defrost-Luftkanal 6 zweigt dagegen wiederum direkt vom Gehäusebereich ab.

In den Misch-/Verteileinheiten 20 wird die kalte und warme Luft bedarfsgemäß gemischt und auf Luftkanäle zu den einzelnen Ausströmern 16 im entsprechenden Zielbereich verteilt. Hierbei beginnen je zwei Luftkanäle 10 für die Fondbelüftung und zwei Luftkanäle 12 für den hinteren Fußraum an der Misch-/Verteileinheit 20, welche dem Fondbereich zugeordnet ist, und je ein Luftkanal 11 für die Mitteldüse, ein Luftkanal 14 für die Seitendüse und ein Luftkanal 13 für den vorderen Fußraum an jeder der dem Frontbereich zugeordneten Misch-/Verteileinheiten 20. Die Zahl der Misch-/Verteileinheiten 20 entspricht üblicherweise der Zonenzahl der Kraftfahrzeug-Klimaanlage 1.

Gemäß einer weiteren, nicht in der Zeichnung dargestellten Variante sind Heizer und Verdampfer wieder in einer Ebene angeordnet, in diesem Fall jedoch nebeneinander, so dass sich eine sehr breite Front ergibt. Im Falle einer derartigen Anordnung von Heizer und Verdampfer werden bevorzugt auch die Abgriffe für warme und kalte Luft für die einzelnen Zielbereiche nebeneinander angeordnet.

Entsprechend einer weiteren Variante, ist das Gehäuse nach den Wärmeübertragern unterteilt ausgebildet, d.h. je nach Ausstattung kann ein entsprechendes, in Abhängigkeit von der Zonenzahl ausgebildetes Modul angesetzt werden, welches die entsprechenden Öffnungen für die Luftkanäle zu den einzelnen Ausströmern enthält. Ausströmer die Luft gleicher Temperatur und/oder dieselbe Luftmenge oder denselben Luftstrom erhalten sollen von einem gemeinsamen Abgriff versorgt werden. Dadurch können Klappen und Stellmotoren entfallen. Ebenfalls können für einfachere Modelle die Abgriffe für die Seitendüsen rechts und links miteinander verbunden werden.

Gemäß einer weiteren Variante wird ein oder ein identisches Gehäuse für Klimaanlagen unterschiedlicher Zonenzahlen verwendet. Einzelne Klappen werden je nach Anzahl der Zonen für die, die entsprechende Klimaanlage vorgesehen ist miteinander gekoppelt. So können beispielsweise die Klappen für die Fondbelüftung rechts und links oder für den Fußraum Front und Fond bei geringerer Zonenzahl miteinander gekoppelt werden, so dass verschiedene Stellmotoren entfallen und sich die Regelung vereinfacht. Hierbei erfolgt die Auslegung vorzugsweise für eine vierzonige Klimaanlage mit elf Auslässen (1 x Defrost, 2 x Mitteldüsen, 2 x Seitendüsen, 2 x Fußraum Front, 2 x Fußraum Fond, 2 x Fondbelüftung, d.h. insgesamt zweiundzwanzig Öffnungen, um die kalte und warme Luft abzugreifen).

## Patentansprüche

1. Kraftfahrzeug-Klimaanlage, insbesondere mehrzonige Kraftfahrzeug-Klimaanlage, aufweisend mindestens ein Gebläse, mindestens einen Heizer (2) und mindestens einen Verdampfer (3), die in einem Gehäuse (4) angeordnet sind, **dadurch gekennzeichnet, dass** das Gehäuse (4) derart ausgebildet ist, dass in Luftströmungsrichtung gesehen nach dem Heizer (2) und Verdampfer (3) eine Mehrzahl von Luftauslässen eine zusammenhängende Fläche bildend zumindest über einen kurzen Bereich nebeneinander parallel verlaufend angeordnet sind, die zu Luftkanälen mit mindestens zwei unterschiedlichen Zielbereichen führen.

2. Kraftfahrzeug-Klimaanlage nach Anspruch 1, **dadurch gekennzeichnet, dass** der Heizer (2) in einer Ebene mit dem Verdampfer (3) angeordnet ist.

3. Kraftfahrzeug-Klimaanlage nach Anspruch 1 oder 2, **dadurch gekennzeichnet, dass** der Heizer (2) räumlich oberhalb von dem Verdampfer (3) angeordnet ist.

4. Kraftfahrzeug-Klimaanlage nach einem der vorhergehenden Ansprüche, **dadurch gekennzeichnet, dass** das Gehäuse (4) ein Verhältnis von Breite zu Höhe von 3,0 bis 1,6, insbesondere von 2,8 bis 1,9 aufweist.

5. Kraftfahrzeug-Klimaanlage nach einem der vorhergehenden Ansprüche, **dadurch gekennzeichnet, dass** im Gehäuse (4) eine Mehrzahl von parallel zueinander verlaufenden Trennwänden (7) vorgesehen ist.

6. Kraftfahrzeug-Klimaanlage nach Anspruch 5, **dadurch gekennzeichnet, dass** zwischen zwei Trennwänden (7) und zwischen der Gehäusewand und der äußersten Trennwand (7) jeweils mindestens eine Klappe (9) zum Verschließen der Öffnung vorgesehen ist.

7. Kraftfahrzeug-Klimaanlage nach einem der vorhergehenden Ansprüche, **dadurch gekennzeichnet, dass** im Gehäuse (4) eine Trennebene (5) zumindest nach dem Heizer (2) und Verdampfer (3) vorgesehen ist.

8. Kraftfahrzeug-Klimaanlage nach Anspruch 7, **dadurch gekennzeichnet, dass** die Trennebene (5) die einem Zielbereich zugeordneten Klappen (9), die zum Verschließen der Öffnungen vorgesehen sind, in einen Warmluft- und einen Kaltluftkanal unterteilt.

9. Kraftfahrzeug-Klimaanlage nach einem der vorhergehenden Ansprüche, **dadurch gekennzeichnet, dass** das Gehäuse (4) im Bereich der Trennwände (7) und die Luftverteilung und -temperierung regelnden Klappen (9) spiegelsymmetrisch zur vertikalen Mittelebene des Kraftfahrzeugs (X-Z-Ebene) ausgebildet ist.

10. Kraftfahrzeug-Klimaanlage nach einem der vorhergehenden Ansprüche, **dadurch gekennzeichnet, dass** jeweils ein Warmluft- und ein Kaltluftkanal nebeneinander verlaufend bis zum Zielbereich oder bis kurz vor dem Zielbereich vorgesehen sind.

11. Kraftfahrzeug-Klimaanlage nach Anspruch 10, **dadurch gekennzeichnet, dass** eine Mischeinheit (19) für den Warmluft- und Kaltluftkanal direkt vor dem Ausströmer (16) des Zielbereichs vorgesehen ist.

12. Kraftfahrzeug-Klimaanlage nach Anspruch 11, **dadurch gekennzeichnet, dass** die Mischeinheit (19) in ein Modul (18) mit dem Ausströmer (16) integriert ist.

13. Kraftfahrzeug-Klimaanlage nach Anspruch 12, **dadurch gekennzeichnet, dass** in das Modul (18) mindestens eine Klappe (9) integriert ist.

14. Kraftfahrzeug-Klimaanlage nach Anspruch 10, **dadurch gekennzeichnet, dass** eine Misch-/Verteileinheit (20) für den Warmluft- und Kaltluftkanal vor mehreren Ausströmern (16) des Zielbereichs vorgesehen ist.

15. Kraftfahrzeug-Klimaanlage nach Anspruch 14, **dadurch gekennzeichnet, dass** je eine Misch-/Verteileinheit (20) einer Zone zugeordnet ist.

16. Kraftfahrzeug-Klimaanlage nach Anspruch 14 oder 15, **dadurch gekennzeichnet, dass** je eine Misch-/Verteileinheit (20) einer Fußraumdüse und mindestens einer Belüftungsdüse, insbesondere einer Mittel- und einer Seitendüse, zugeordnet ist.

17. Kraftfahrzeug-Klimaanlage nach einem der vorhergehenden Ansprüche, **dadurch gekennzeichnet, dass** der Verbindungskanal vom Gebläse zum Heizer (2) und Verdampfer (3) schräg zur Eintrittsfläche des Heizers (2) und Verdampfers (3) verlaufend angeordnet ist, wobei sich der Verbindungskanal (15) verjüngt, insbesondere keilförmig verjüngt.

18. Kraftfahrzeug-Klimaanlage nach einem der vorhergehenden Ansprüche, **dadurch gekennzeichnet, dass** ein Defrost-Auslass über einen Großteil der Oberseite des Gehäuses (4) verlaufend ausgebildet ist.
